# EUROPEAN PATENT APPLICATION

(11) **EP 1 147 800 A1**
(43) Date of publication of application: **24.10.2001**
(21) Application number: 00126848.1
(22) Date of filing: 07.12.2000
(51) Int. Cl.: B01D 46/10, F24F 13/28

(54) **Strainer screen support frame**

(30) Priority: 24.02.2000 JP
(71) Applicant: Huang, Wen-Chin, Tao Yuan City, Taiwan (CN)
(72) Inventor: Huang, Wen-Chin, Tao Yuan City, Taiwan (CN)
(74) Representative: Reichel, Wolfgang, Dipl.-Ing.

(57) **Abstract**

A strainer screen support frame has a main shelf (1), a blocking panel (2), and an upper pressing panel (4). The main shelf (1) has an upper plate (10), a separation plate (11), a guide bevel plate (13), a blocking plate (12), a click recess (17), and a base seat (19). The upper plate (10) has a first groove (101). The separation plate (11) has a second groove (102) and a downward bar (14). A screen frame receiving spacing (15) is formed between the guide bevel plate (13) and the blocking plate (12). A slot (16) is formed between the blocking plate (12) and the base seat (19). The base seat (19) has a third groove (103) and a fourth groove (18). The blocking panel (2) has a downward protruded block (20). The upper pressing panel (4) has a connection edge (41), a downward panel (42), a first click groove (40), and a positioning groove (44). A screen frame (3) is disposed between the separation plate (11) and the blocking plate (12). The blocking panel (2) is inserted in the slot (16).

## Description

The present invention relates to a strainer screen support frame according to the first portion of claim 1.

A screen frame is commonly used for supporting a screen net. The screen net covers an air outlet of an air conditioning equipment in a dustless room or a building. Conventionally, the screen frame is fixed on a ceiling. However, it is often cumbersome to detach the screen frame in order to replace the screen net.

Object of the present invention is to provide a strainer screen support frame which can engage with a screen frame quickly thereby allowing the screen frame to be replaced easily.

The problem is solved by a strainer screen support frame according to claim 1.

A strainer screen support frame in accordance with the present invention can engage with a screen frame very quickly.

Further improvements to the inventive strainer screen support frame can be made according to claim 2 or 3.

Preferred embodiments of a strainer screen support frame according to the present invention will now be described in detail with reference to the accompanying drawings in which:
FIG. 1 is a perspective view of a main shelf of a preferred embodiment in accordance with the present invention;
FIG. 2 is an elevational view of a main shelf of a preferred embodiment in accordance with the present invention;
FIG. 3 is a perspective exploded view of a strainer screen support frame of a first preferred embodiment in accordance with the present invention;
FIG. 4 is a partially sectional view of a strainer screen support frame of a first preferred embodiment in accordance with the present invention;
FIG. 5 is a perspective exploded view of a strainer screen support frame of a second preferred embodiment in accordance with the present invention;
FIG. 6 is a partially sectional view of strainer screen support frame of a second preferred embodiment in accordance with the present invention; and
FIG. 7 is a sectional assembly view of a strainer screen support frame of a second preferred embodiment in accordance with the present invention.

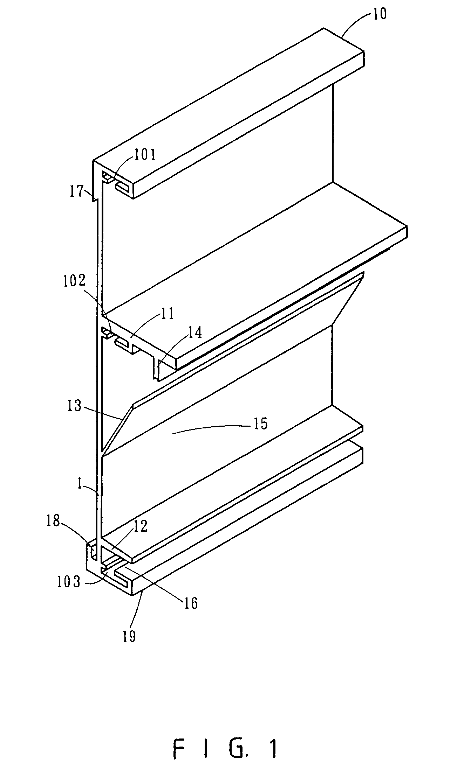

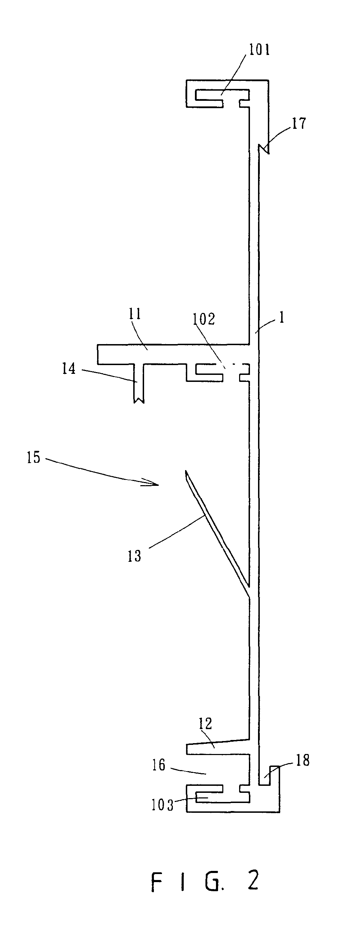

Referring to FIGS. 1 to 4, a first strainer screen support frame comprises a main shelf 1, a blocking panel 2, and an upper pressing panel 4.

The main shelf 1 has an upper plate 10, a separation plate 11, a guide bevel place 13, a blocking plate 12, a click recess 17, and a base seat 19.

The upper plate 10 has a first groove 101.

The separation plate 11 has a second groove 102 and a downward bar 14.

A screen frame receiving spacing 15 is formed between the guide bevel plate 13 and the blocking plate 12.

A slot 16 is formed between the blocking plate 12 and the base seat 19.

The base seat 19 has a third groove 103 communicating with the slot 16, and a fourth groove 18.

The blocking panel 2 has a downward protruded block 20.

The upper pressing panel 4 has a connection edge 41, a downward panel 42, a first click groove 40, and a positioning groove 44.

The upper pressing panel 4 is disposed on the upper plate 10 The first click groove 40 of the upper pressing panel 4 engages with the click recess 17 of the main shelf 1 A clearance 43 is formed between the connection edge 41 and the upper plate 10.

A screen frame 3 is disposed between the separation plate 11 and the blocking plate 12. A gel 31 is disposed on an upper portion of the screen frame 3.

The blocking panel 2 is inserted in the slot 16.

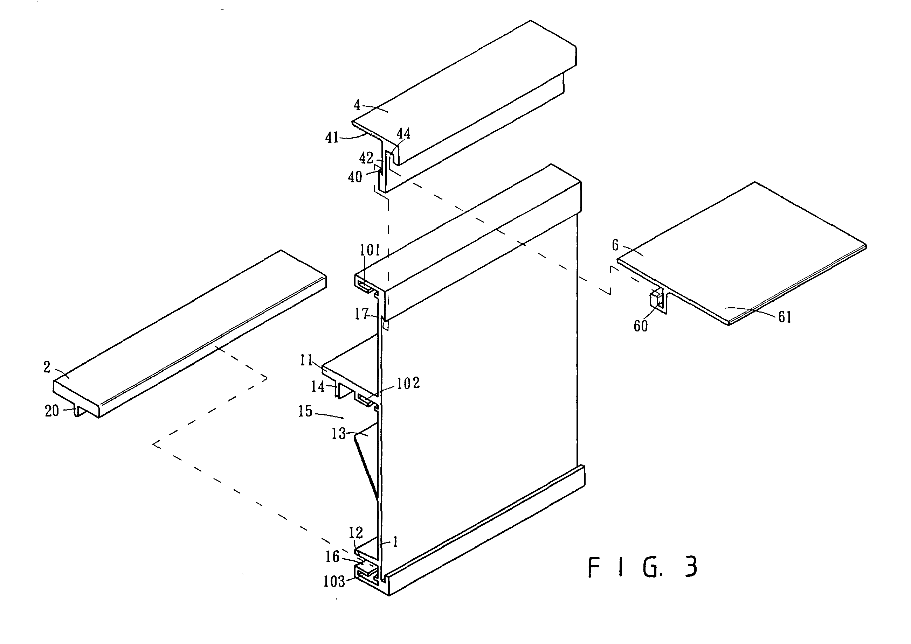

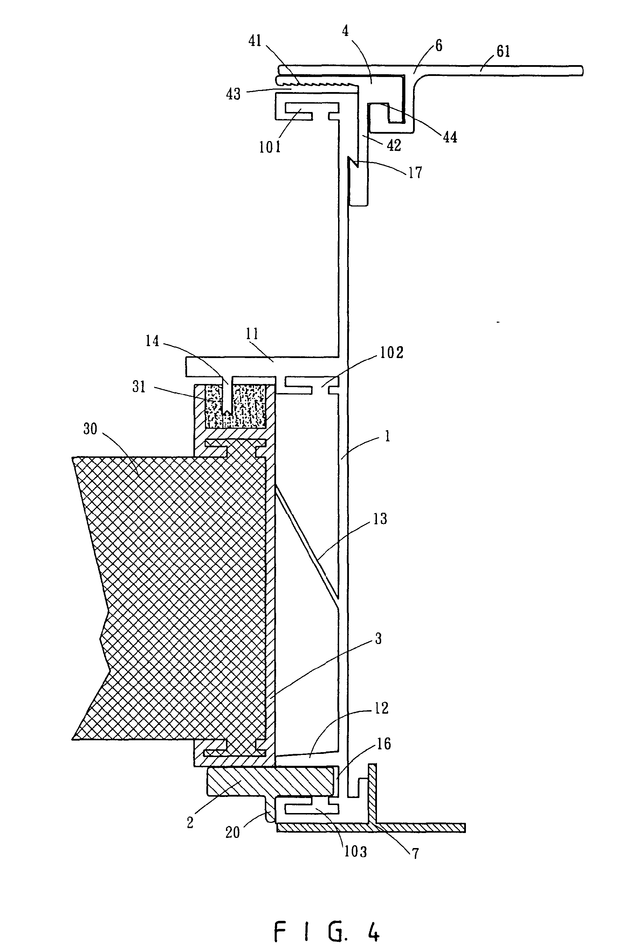

Referring to FIGS. 3 and 4, an upper positioning panel 6 has a second click groove 60 engaging with the positioning groove 44 of the upper pressing panel 4 and a top face 61 abutting a ceiling (not shown in the figures). A steel panel 7 is disposed on a bottom of the base seat 19.

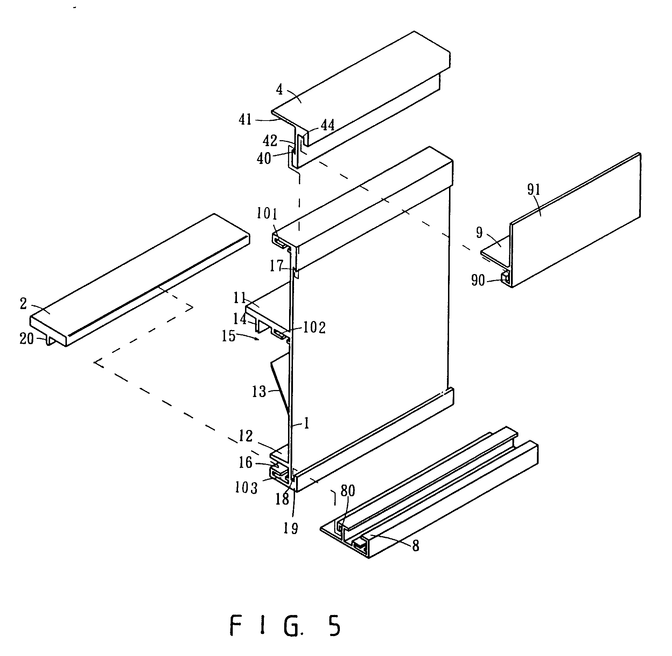

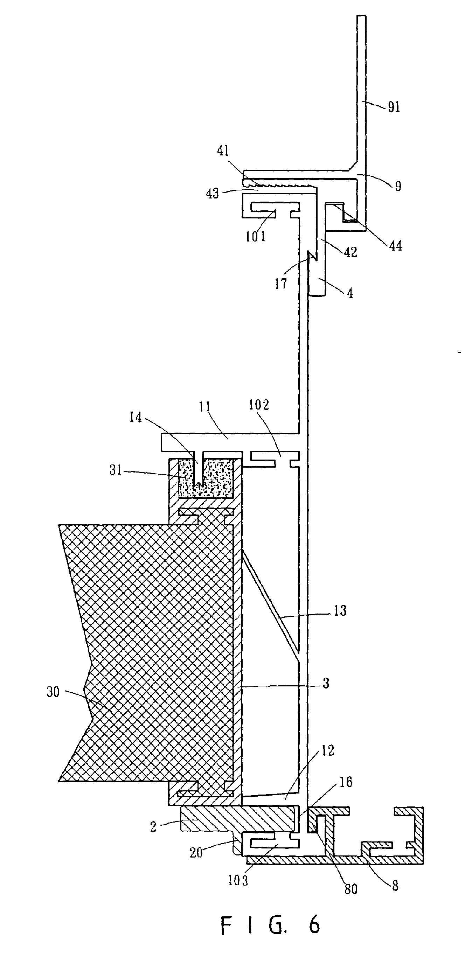

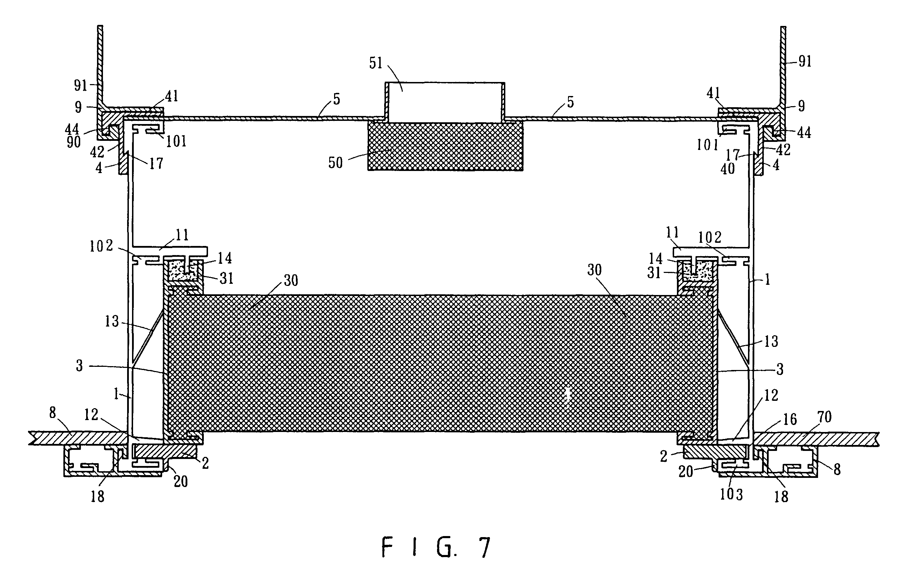

Referring to FIGS. 5 to 7, an angle positioning panel 9 replaces the positioning panel 6. The angle positioning panel 9 has a longitudinal plate 91 and a positioning recess 90 engaging with the positioning groove 44 of the upper pressing panel 4.

A base panel 8 is disposed on a bottom of the base seat 19. The base panel 8 has a guide groove 80 engaging with the fourth groove 18 of the base seat 19.

## Claims

1. A strainer screen support frame comprising a main shelf (1), a blocking panel (2), and an upper pressing panel (4),
**characterized in that:**
the main shelf (1) has an upper plate (10), a separation plate (11), a guide bevel plate (13), a blocking plate (12), a click recess (17), and a base seat (19),
the upper plate (10) has a first groove (101),
the separation plate (11) has a second groove (102) and a downward bar (14),
a screen frame receiving spacing (15) is formed between the guide bevel plate (13) and the blocking plate (12),
a slot (16) is formed between the blocking plate (12) and the base seat (19),
the base seat (19) has a third groove (103) communicating with the slot (16), and a fourth groove (18),
the blocking panel (2) has a downward protruded block (20)
the upper pressing panel (4) has a connection edge (41), a downward panel (42), a first click groove (40), and a positioning groove (44),
the upper pressing panel (4) is disposed on the upper plate (10),
the first click groove (40) of the upper pressing panel (4) engages with the click recess (17) of the main shelf (1),
a screen frame (3) is disposed between the separation plate (11) and the blocking plate (12), and
the blocking panel (2) is inserted in the slot (16).

2. A strainer screen support frame as claimed in claim 1, wherein an upper positioning panel (6) has a second click groove (60) engaging with the positioning groove (44) of the upper pressing panel (4).

3. A strainer screen support frame as claimed in claim 1, wherein an angle positioning panel (9) has a longitudinal plate (91) and a positioning recess (90) engaging with the positioning groove (44) of the upper pressing panel (4).
